Europäisches Patentamt

(19) European Patent Office

Office européen des brevets

(11) Publication number: **0 109 939**

**B1**

(12) **EUROPEAN PATENT SPECIFICATION**

(45) Date of publication of patent specification: **15.10.86**

(51) Int. Cl.⁴: **B 60 B 7/06**

(21) Application number: **83830215.6**

(22) Date of filing: **02.11.83**

(54) **Disk wheel for automobile vehicles.**

(30) Priority: **17.11.82 IT 5393982 u**

(43) Date of publication of application:
**30.05.84 Bulletin 84/22**

(45) Publication of the grant of the patent:
**15.10.86 Bulletin 86/42**

(84) Designated Contracting States:
**DE FR GB IT NL SE**

(56) References cited:
**CH-A- 184 750**
**DE-A-2 447 575**
**FR-A- 760 208**
**FR-A-1 385 153**
**FR-A-2 515 116**
**GB-A-2 054 483**
**GB-A-2 113 158**
**US-A-2 298 669**
**US-A-4 217 003**

(73) Proprietor: **FIAT AUTO S.p.A.**
**Corso Giovanni Agnelli 200**
**I-10135 Torino (IT)**

(72) Inventor: **Abbate Daga, Silvano**
**Via Paisiello 65**
**I-10154 Torino (IT)**

Courier Press, Leamington Spa, England.

## Description

The present invention refers to the disk wheels for automobile vehicles in which the disk is provided with angularly spaced holes into which engage the screws for securing the wheel to a related support, and in which a hub cap is applied to the disk.

In the traditional wheels of this type the hub cap is generally provided with holes and the disk is locked to the wheel using the same securing screws of the wheel which engage into the above mentioned holes.

By this solution the mounting and the dismounting of the hub cap may result rather difficult, as these operations evidently involve the manipulation of the wheel securing screws.

It has also been proposed to connect the hub cap to the disk by simple press-on means or snap fastener means, settling parts of reciprocal coupling on both the members.

Also by this solution the removal of the hub cap is not so easy, as it requires a considerable effort or the use of a lever which must be inserted between the hub cap and the disk of the wheel.

It is known from US—A—4 217 003 the use of a disk wheel for automobile vehicles in which the disk is provided with angularly spaced holes into which engage the screws for securing the wheel to a related support, and in which a hub cap is applied to the disk. The wheel disk and the hub cap are provided with means (retention member, abutment ring and the annular depression in the disk) co-operating for the connections by a bayonet engagement of the hub cap to the securing screws of the wheel.

The purpose of the present invention is to produce a wheel for automobile vehicles of the above defined type in which the coupling between the hub cap and the wheel disk can secure a practical and easy mounting and dismounting without the removal of the wheel securing screws or the use of particular tools, assuring at the same time a connection steady and free from vibrations.

In order to attain this purpose the object of the present invention is a disk wheel for automobile vehicles according to the prior art defined in the main claim characterized in that the disk (12) is provided with a series of protuberances (28) interspaced with the holes (18) for the securing screws (22) and angularly spaced as such holes (18) and in that the hub cap (30) is constituted by a disk (32) presenting on its internal face a crown of axial flexible sectors (40) provided on their free edge with notches (46) angularly placed as the protuberances (28) of the disk (12) of the wheel (10) and with retention teeth (42) placed between the notches (46) and able in the mounting to engage in an elastic way the frusto-conic parts (26) of the securing screws (22) of the wheel (10) rotating the hub cap (30) with respect to the disk (12) starting from a position where said notches (46) are placed in front of the securing screws (22) towards a position where said notches are engaged by the above mentioned proturberances (28) of the disk (12).

As generally the wheel securing screws present a head and a shank jointed by a frusto-conic part with the major diameter towards the head according to the invention the disk is provided with a series of protuberances (28) interspaced with the holes (18) for the securing screws (22) and angularly spaced as such holes (18), and the hub cap (30) is constituted by a disk (32) presenting on its internal face a crown of axial flexible sectors (40) provided on their free edge with notches (46) angularly placed as the protuberances (28) of the disk (12) of the wheel (10) and with retention teeth (42) placed between the notches (46) and able in the mounting to engage in an elastic way the frusto-conic parts (26) of the securing screws (22) of the wheel (10) rotating the hub cap (30) with respect to the disk (12) starting from a position where said notches (46) are placed in front of the securing screws (22) towards a position where said notches are engaged by the above mentioned protuberances (28) of the disk (12).

Preferably the crown of the flexible sectors of the hub cap is surrounded by a circumferential elastic member which can advantageously be a metallic cut ring.

Further characteristics and advantages of the present invention will be apparent from the hereinafter detailed description with reference to the accompanying drawings in which:

Fig. 1 is a schematic view in front elevation of a hub cap according to the ivnention;

Fig. 2 is a perspective rear view of the hub cap;

Fig. 3 is a section in partial and perspective view of the wheel;

Fig. 4, 5 and 6 are three perspective views on a larger scale which exemplify the application of the hub cap to the wheel disk in three successive phases and

Fig. 7, 8 and 9 are three views in partial cross section respectively along the line VII—VII of Fig. 4, VIII—VIII of Fig. 5 and IX—IX of Fig. 6.

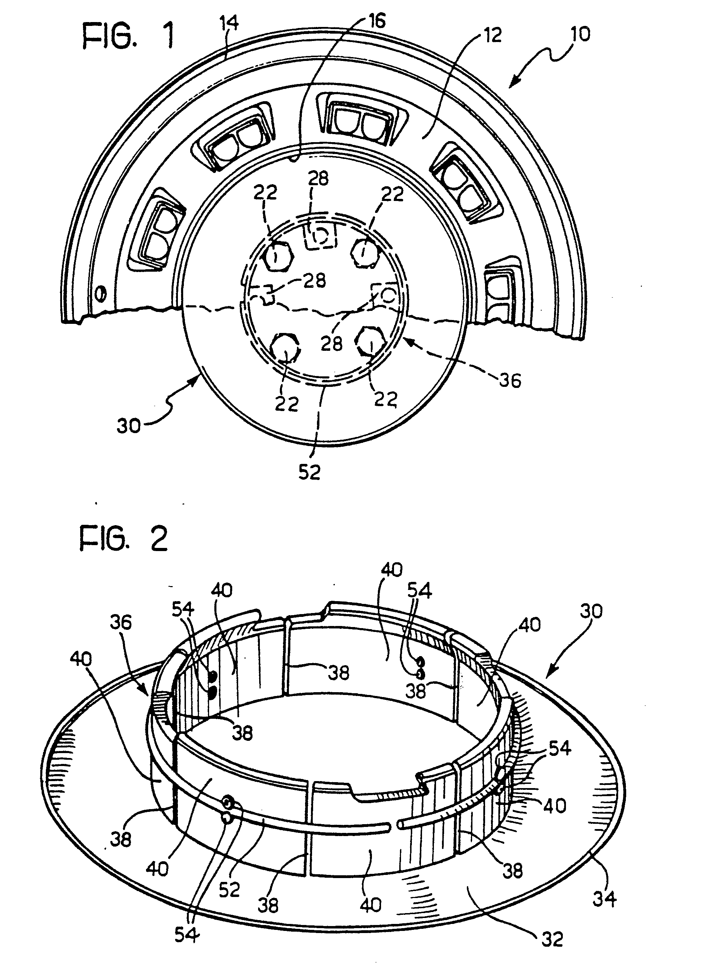

Referring initially to Fig. 1 to 3, 10 is a wheel for automobile vehicles in its whole comprising a disk made of plate 12 and a rim 14 applied to the circumferential edge of the disk 12 and fitted to receive a tire.

The disk 12 presents a central lower part 16 where are made four drawn holes angularly equally spaced 18 the edges of which joins the outer face of the lower part 16 through the frusto-conic surfaces 20.

The holes 18 are provided for the engagement of the related screws 22 through which the wheel 10 is secured to the related support of an automobile vehicle. The screws 22 are of a conventional type and each of them has a threaded non visible shank and a head 24 jointed to the shank by a frusto-conic part 26 with the major diameter towards the head 24.

The lower part 16 of the disk 12 is also provided with four drawn protuberances angularly equally spaced 28 and interspaced with holes 18.

The numeral 30 shows in its whole a hub cap made of a single piece of molded plastic and dismountably applied to the disk 12 in correspondence with the lower part 16. The hub cap 30 comprises a disk 32 having a small peripheric bent edge 34 having a diameter substantially corresponding to the one of the side wall of the lower part 16 and a shell 36 axially projecting from the internal face of the disk 32, at a certain distance from the peripheric edge 34. The shell 36 presents a series of axial slots 38 dividing it in a plurality of flexible sectors 40 (six in the illustrated example) and it is provided in correspondance of its free edge with a circumferential protuberance having form of a retention tooth. The active surface (44) of the retention tooth (42) is of a frusto-conic shape complementary to the one of the jointing parts of the securing screws 22 having a frusto-conic surface 26.

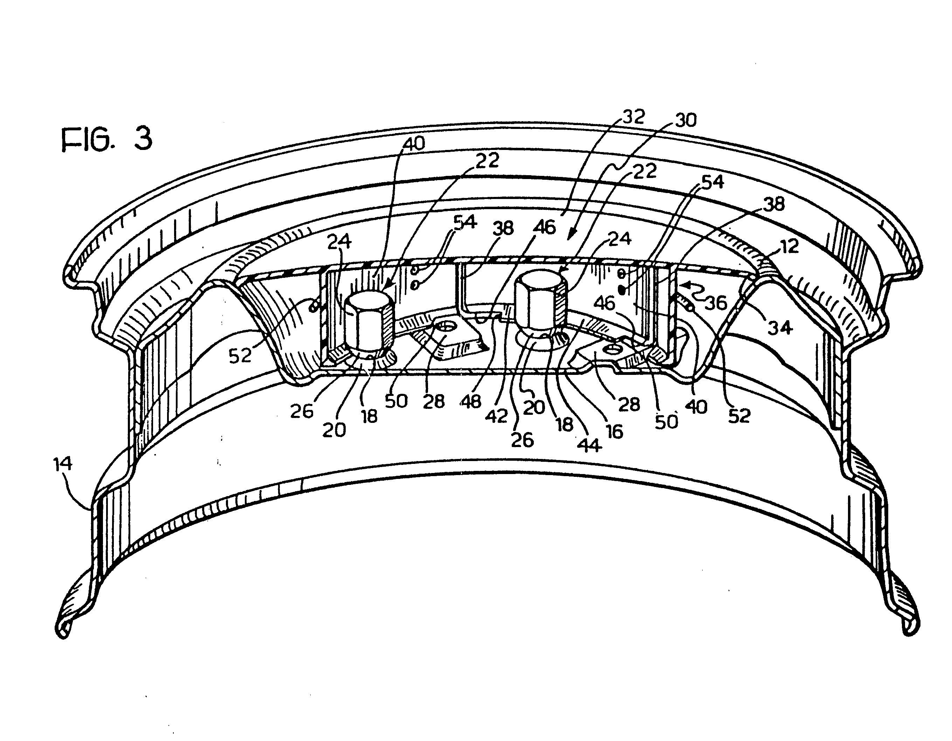

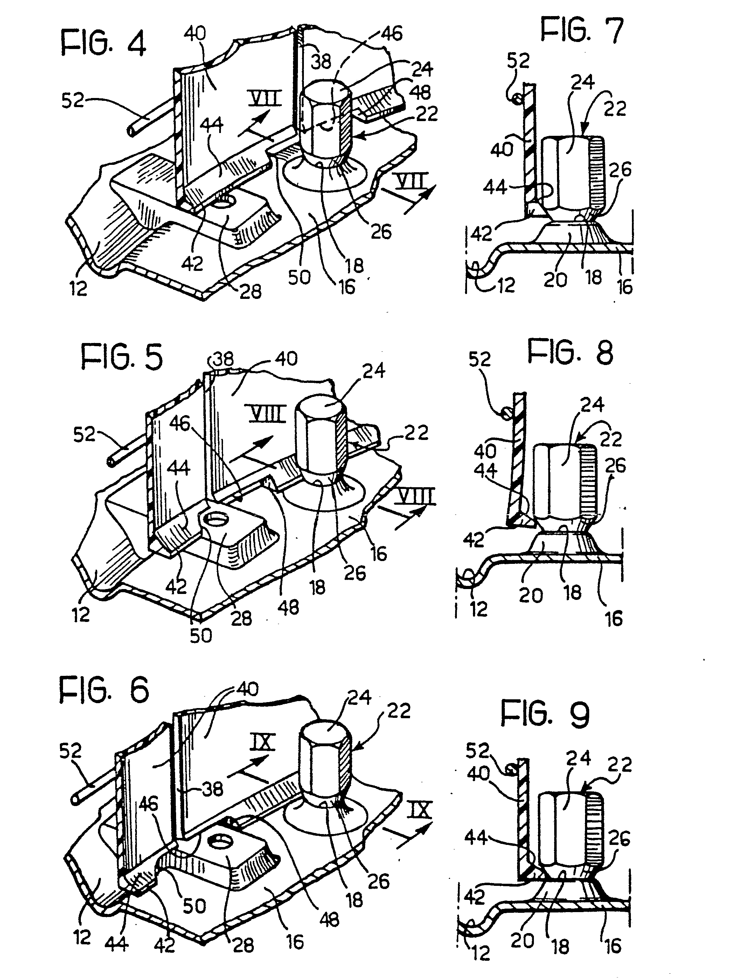

The retention tooth 42 is interrupted in correspondance of four positions angularly spaced as the protuberances 28 of the disk 16 by notches 46 being as wide at least as the above mentioned protuberances 28. As it can be clearly seen in Fig. 3 and 4 each notch 46 is bounded at one end by a wall 48 radially extending with respect to the shell 36, and at the opposite end by a sloping wall 50.

The sectors 40 of the shell 36 are circumferentially surrounded by a cut metallic ring 52 acting to prevent the radial expansion of the shell 36, i.e. the elastic deformation of the sectors 40 outwards.

The ring 52 is axially kept on the shell 36 by positioning members 54 constituted, in the illustrated example, by couples of rivets applied to the sectors 40 in angularly spaced positions.

Thanks to the above described configuration, the hub cap is connected to the disk 12 of the wheel 10 by a coupling of the bayonet type using the securing screws 22, which permits to render easy and comfortable the mounting and dismounting of the hub cap. In fact the mounting is made applying the hub cap 30 in correspondance of the lower part 16 and initially positioning the notches 46 of the shell 36 angularly corresponding to the screws 22, as illustrated in Fig. 4. In this position the retention tooth 42 leans on the protuberances 28 and the hub cap 30 is, with respect to the bottom 16, in the raised position illustrated in Fig. 7.

Starting from this position, rotating the hub cap 30 anticlockwise with respect to the drawings the retention tooth 42 is set in correspondence with the screws 22, so that the flexible sectors 40 deform elastically outwards because of the contrast between this retention tooth 42 and the frusto-conic portions 26 adjacent to the heads 24 of the screws 22 (Fig. 5 and 8).

Continuing with the rotation, the notches 46 engage the protuberances 28, and the portions of the retention tooth 42, following the notches 46 in the rotation direction of the hub cap 30, slide along the frusto-conic portions 26 towards the bottom of the lower part 16, setting between the heads 24 and the parts 20 due to the elastic return inwardly the sectors 40 (Fig. 6 and 9). The hub cap 30 is therefore stably locked in this position, due to the action of the elastic ring 52.

For dismounting it is sufficient to rotate the hub cap 30 oppositely, i.e. clcockwise referring to the drawings disengaging the notches 46 from the protuberances 28, thanks to the presence of the slopes 50, and setting those notches 46 angularly corresponding to the screws 22, so permitting the axial removal and consequently the separation of the hub cap 30 from the disk 12.

From the above description it appears evident that the application or the removal of the hub cap 30 can be effected very easily and comfortably with a minimum manual effort and without requiring particular tools or the manipulation of the securing screws 22.

**Claims**

1. Disk wheel for automobile vehicles in which the disk is provided with angularly spaced holes into which engage the screws for securing the wheel to a related support, and in which a hub cap is applied to the disk, wherein the wheel disk (12) and the hub cap (30) are provided with means cooperating for the connection by a bayonet engagement of the hub cap (30) to the securing screws (22) of the wheel (10), and wherein the securing screws present a head and a shank jointed by a frusto-conic part with the major diameter towards the head, characterized in that the disk (12) is provided with a series of protuberances (28) interspaced with the holes (18) for the securing screws (22) and angularly spaced as such holes (18) and in that the hub cap (30) is constituted by a disk (32) presenting on its internal face a crown of axial flexible sectors (40) provided on their free edge with notches (46) angularly placed as the protuberances (28) of the disk (12) of the wheel (10) and with retention teeth (42) placed between the notches (46) and able in the mounting to engage in an elastic way the frusto-conic parts (26) of the securing screws (22) of the wheel (10) rotating the hub cap (30) with respect to the disk (12) starting from a position where said nothces (46) are placed in front of the securing screws (22) towards a position where said notches are engaged by the above mentioned protuberances (28) of the disk (12).

2. Wheel according to claim 1 characterized in that the above mentioned notches (46) are bounded at one end by a sloping wall (50).

3. Wheel according to claim 1 or claim 2 characterized in that the retention teeth (42) present active surfaces (44) complementary to the one of the frusto-conic members (26) of the securing screws (22) of the wheel (10).

4. Wheel according to any of claims from 1 to 3 characterized in that the crown of flexible sectors (40) of the hub cap (30) is surrounded by an elastic circumferential member (52).

5. Wheel according to claim 4 characterized in that the circumferential elastic member is constituted by a metallic cut ring (52) and in that the flexible sectors (40) of the hub cap (30) are provided with members of axial positioning (54) of this ring (52).

6. Wheel according to any of the previous claims characterized in that the holes (18) of the rim (12) for the securing screws (22) of the wheel (10) have their edges raised with respect to the external face of the disk (12) and jointed with such an outer face by frusto-conic surfaces (20).

7. Wheel according to any of the previous claims characterized in that the hub cap (30) is made of a single piece of molded plastic material.

**Patentansprüche**

1. Schiebenrad für Kraftfahrzeuge, bei dem die Radscheibe (12) mit Winkelabstand voneinander angeordnete Bohrungen (18) für Schrauben (22) zur Befestigung des Rades an einem Radträger aufweist und bei dem die Radscheibe (12) und ein Nabendeckel (30) Verbindungsmittel für den bajonettartigen Eingriff des Nabendeckels (30) mit den Schrauben (22) haben, die zwischen Schaft und Kopf eine kegelstumpfförmige übergangsfläche haben, deren größerer Durchmesser am Kopf (24) liegt, dadurch gekennzeichnet, daß die Radscheibe (12) eine Reihe von Vorsprüngen (28) aufweist, die jeweils zwischen den für die Schrauben (22) vorgesehenen Bohrungen (18) liegen und voneinander denselben Winkelabstand wie diese haben, und daß der Nabendeckel (30) aus einer Scheibe (32) besteht, von deren Innenseite ein Kranz aus axial verlaufenden, flexiblen Sektoren (40) absteht, deren freie Enden Einschnitte (46), die voneinander denselben Windelabstand wie die Vorsprünge (28) der Radscheibe (12) haben, sowie Haltevorsprünge (42) aufweisen, die zwischen den Einschnitten (46) liegen und die bei der Montage des Nabendeckels (30) durch Verdrehen des Nabendeckels (30) bezüglich der Radscheibe (12) aus einer Stellung, in der die Einschnitte (46) vor den Schrauben (22) liegen, in eine Stellung, in der die Vorsprünge (28) der Radscheibe (12) in die Einschnitte (46) eingreifen, elastisch die kegelstumpfförmigen Flächen (26) der Schrauben (22) des Rades (10) hintergreifen.

2. Scheibenrad nach Anspruch 1, dadurch gekennzeichnet, daß die Einschnitte (46) an einem Ende jeweils durch eine schräge Auflauffläche (50) begrenzt sind.

3. Scheibenrad nach Anspruch 1 oder 2, dadurch gekennzeichnet, daß die Haltevorsprünge (42) Eingriffsflächen (44) haben, die entsprechend den kegelstumpfförmigen Flachen (26) der Schrauben (22) ausgebildet sind.

4. Scheibenrad nach einem der Ansprüche 1 bis 3, dadurch gekennzeichnet, daß der Kranz der flexiblen Sektoren (40) des Nabendeckels (30) am Umfang von einem elastischen Organ (52) umfaßt ist.

5. Scheibenrad nach Anspruch 4, dadurch gekennzeichnet, daß das elastische Organ aus einem offenen, metallischen Ring (52) besteht und daß die flexiblen Sektoren (40) des Nabendeckels (30) Mittel (54) zur axialen Positionierung des Ringes (52) aufweisen.

6. Scheibenrad nach einem der vorhergehenden Ansprüche, dadurch gekennzeichnet, daß die für die Schrauben (22) zur Befestigung des Rades (10) vergesehenen Bohrungen (18) der Radscheibe (12) mit ihrem jeweiligen Rand über der Außenseite der Radscheibe (12) liegen, wobei dieser Rand mit der Außenseite der Radscheibe (12) durch eine Kegelstumpf-Fläche (20) verbunden ist.

7. Scheibenrad nach einem der vorhergehenden Ansprüche, dadurch gekennzeichnet, daß der Nabendeckel (30) aus einem einstückigen Kunststoff-Formteil besteht.

**Revendications**

1. Roue à disque pour véhicules automobiles dans laquelle le disque est muni de trous espacés angulairement dans lesquels s'enfilent les vis destinées à fixer la roue à son support, et dans laquelle un enjoliveur est monté sur le disque, roue dans laquelle le disque (12) et l'enjoliveur (30) sont équipés de moyens qui coopèrent pour former un assemblage à baïonnette entre l'enjoliveur (30) et les vis de fixation (22) de la roue (10) et dans laquelle les vis de fixation présentant une tête et une tige raccordées par une partie tronconique dont le grand diamètre est dirigée vers la tête, caractérisée en ce que le disque (12) est muni d'une série de protubérances (28) intercalées entre les trous (8) destinés à recevoir les vis de fixation (22) et espacées angulairement de la même façon que ces trous (18) et en ce que l'enjoliveur (30) est constitué par un disque (32) présentant sur sa face intérieure une couronne de secteurs axiaux flexibles (40) munis sur leur bord libre d'encoches (46) disposées angulairement de la même façon que les protubérances (28) du disque (12) de la roue (10), et de dents de retenue (42) placées entre les encoches (46) et qui, au cours de la pose, peuvent coopérer élastiquement avec les parties tronconiques (26) des vis de fixation (22) de la roue (10) lorsqu'on fait tourner l'enjoliveur (30) par rapport au disque (12), en partant d'une position dans laquelle lesdites encoches (46) sont placées en face des vis de fixation (22) et en allant vers une position dans laquelle lesdites encoches sont en prise avec les protubérances (28) du disque (12).

2. Roue selon la revendication 1, caractérisée en ce que lesdites encoches (46) sont limitées à une extrémité par une paroi inclinée (50).

3. Roue selon la revendication 1 ou la revendication 2, caractérisée en ce que les dents de retenue (42) présentent des surfaces actives (44) complémentaires de celles des éléments tronconiques (26) des vis de fixation (22) de la roue (10).

4. Roue selon l'une quelconque des revendications 1 à 3, caractérisée en ce que la couronne de secteurs flexibles (40) de l'enjoliveur (30) est entourée d'un élément circonférentiel élastique (52).

5. Roue selon la revendication 4, caractérisé en ce que l'élément circonférentiel élastique est constitué par un anneau métallique interrompu (52) et en ce que les secteurs flexibles (40) de l'enjoliveur (30) sont munis d'éléments (54) de positionnement axial de cet anneau (52).

6. Roue selon l'une quelconque des revendications précédentes, caractérisée en ce que les trous (6) du disque (12) prévus pour les vis de fixation (22) de la roue (10) présentent leurs bords en relief par rapport à la face extérieure de disque (12) et raccordés à cette face extérieure par des surfaces tronconiques (20).

7. Roue selon l'une quelconque des revendications précédentes, caractérisée en ce que l'enjoliveur (30) est fait d'une seule pièce de matière plastique moulée.

FIG. 1

FIG. 2

FIG. 3

FIG. 4

FIG. 5

FIG. 6

FIG. 7

FIG. 8

FIG. 9